(19) Europäisches Patentamt / European Patent Office / Office européen des brevets

(11) **EP 4 361 990 A1**

(12) **EUROPEAN PATENT APPLICATION**

(43) Date of publication:
**01.05.2024 Bulletin 2024/18**

(21) Application number: **23205508.7**

(22) Date of filing: **24.10.2023**

(51) International Patent Classification (IPC):
**G08G 1/01** (2006.01)    **G08G 1/04** (2006.01)
**G08G 1/065** (2006.01)    **G08G 1/09** (2006.01)
**H04W 4/44** (2018.01)

(52) Cooperative Patent Classification (CPC):
**G08G 1/0133; G01C 21/3415; G08G 1/0141;**
**G08G 1/0145; G08G 1/04; G08G 1/065;**
**G08G 1/096741; G08G 1/096783; G08G 1/096816;**
**G08G 1/096827; G08G 1/096844; H04W 4/44;**
G08G 1/096708

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.10.2022 PT 2022118276**

(71) Applicant: **Vortex - Associação Para o Laboratorio**
**Colaborativo em Sistemas Ciber-Fisicos**
**e Ciber Segurança**
**4400-307 Vila Nova de Gaia (PT)**

(72) Inventor: **SHOKER, ALI**
**4715-045 BRAGA (PT)**

(74) Representative: **Patentree**
**Edificio Net**
**Rua de Salazares, 842**
**4149-002 Porto (PT)**

(54) **DECENTRALIZED ROAD TRAFFIC SYSTEM FOR CONVERGENT TRANSIENT DATA SHARING BETWEEN VEHICLES AND ROADSIDE UNITS**

(57)    The present disclosure relates to decentralized road traffic system for convergent transient data sharing between vehicles and roadside units. In particular, the disclosure also relates to generic lightweight decentralization computations on RSU networks for providing transient traffic information for vehicles.

Fig. 2

EP 4 361 990 A1

**Description**

**TECHNICAL FIELD**

The present disclosure relates to decentralized road traffic system for convergent transient data sharing between vehicles and roadside units. In particular, the disclosure also relates to generic lightweight decentralization computations on networks of Roadside Units (RSU) for providing transient traffic information for vehicles.

**BACKGROUND**

Modern vehicles rely on High Definition (HD) Maps to improve driver convenience, safety, and transport efficiency. HD Maps are more reliable and helpful when they are rich in information about road elements on a timely basis, i.e., dynamically. Roadside Units (RSUs) in modern road infrastructure are supported with sensors that can provide a novel rich source of road details to HD Maps. Current HD Maps are cloud-based, and thus have many disadvantages, namely, high latency, high cellular bandwidth utilization, and cost.
The technical problem that this disclosure addresses is how to allow the vehicle to get regional updates through RSUs without access to the cloud or any centralized alternative. This raises the challenge to perform collaborative decentralized lightweight computations that are convergent: equivalent state at all RSUs. This is needed so vehicles can read a global view of the region's map and not only a local one, e.g., the current road only.
The main difficulty in decentralized lightweight computations is in achieving convergence, besides network issues, common in such loosely connected and unreliable RSU network, without giving up the latency required by an application (traffic avoidance in this case).
These facts are disclosed in order to illustrate the technical problem addressed by the present disclosure.

**GENERAL DESCRIPTION**

The present disclosure provides a system to do collaborative decentralized computations using the road infrastructure smart devices, also known as Roadside units (RSUs). Example: each RSU detects and counts the number of vehicles passing on a road junction in its proximity. After sharing this data with other RSUs, each RSU is dynamically updated of the global road network traffic.
A vehicle can simply connect to any RSU, e.g., as a service, and computes the best route, e.g., using Dijkstra algorithm. This solution ensures convergence, i.e., all RSUs eventually see the same data, despite network issues, e.g., dropping and/or duplication.
By avoiding the use of the cloud, the vehicle connects directly to the RSU to get a live local-view, e.g., road-wide, but not global view (regional).
The present disclosure solves the problem of local-view RSUs by proposing the RSUs in the region to act as a collaborative computational system for simple services. Thus, the vehicle can connect to a neighbour RSU and get live updates about the global map, e.g., a region.
It is disclosed a method for operating a current static network node of a wireless digital data network comprising a plurality of static network nodes and a plurality of mobile network nodes, said method comprising propagating a conflict-free replicated data type stored in a data storage of said static network node, for convergence in said wireless digital data network of the replicated data type stored in the data storage, wherein said data type comprises a predetermined number of vehicle count fields, each vehicle count field corresponding to a vehicle count for each static network node, comprising:

detecting the passing of a vehicle in surroundings of the static network node;
increasing a vehicle count field corresponding to a vehicle count for the current static network node in the stored data type;
periodically broadcasting the stored data type;
receiving a conflict-free replicated data type from a static network node or a mobile network node;
comparing the vehicle count fields of the stored data type with the received data type,
updating each vehicle count field of the stored data type with the highest vehicle count for each static network node.

In an embodiment, the replicated data type is a hash map or array comprising keys which are static network nodes identifiers and whose values are positive natural number counters.
In an embodiment, the replicated data type is a hash map or array comprising keys which represent road segment identifiers and whose values are structured either as a set of incoming or outgoing traffic.
In an embodiment, in the case of receiving a conflict-free replicated data type from a mobile network node, said replicated data type originated from a static network node.

An embodiment, further comprising:
calculating a route for minimizing encountering traffic to a trip destination using said stored replicated data type of the current static network node.

An embodiment, further comprising:
sending the calculated route to a mobile network node.

In an embodiment, the current static network node is connected to neighbouring static network nodes via a gossip communication protocol.

In an embodiment, the network nodes are streaming the stored data type to an upstream network, thus implementing a Live Traffic Avoidance Service (LTAS).

An embodiment, comprising the following steps:

calculating safety distance following the expression:

$$Safety\_distance = Average\_speed \times Reaction\_time;$$

calculating vehicle capacity for a given road segment following the expression:

$$Segment\_capacity_{SID} = Lanes \times \frac{Segment\_length_{SID}}{(Average\_vehicle\_length + Safety\_distance)};$$

calculating a number of vehicles for a given road segment following the expression:

$$Number\_of\_vehicles_{SID} = \sum_{i \in I_{SID}} c_i - \sum_{o \in O_{SID}} c_o,$$

calculating a traffic density for a given road segment following the expression:

$$Traffic\_density_{SID} = \frac{Number\_vehicles_{SID}}{Segment\_capacity_{SID}};$$

storing the traffic density for a given road segment in a hash map or array of network traffic;
wherein SID is a road segment identification, $I_{SID}$ and $O_{SID}$ are a set of static network nodes of incoming and outgoing vehicles to a road segment, $c_i$ and $c_o$ represent a vehicle count into the road segment and a vehicle count out of the road segment, wherein a road segment is a pair of consecutive static network nodes,
wherein the average speed, the reaction time, segment length, the average vehicle length, and number of lanes are predetermined values.

In an embodiment, the route for minimizing encountering traffic to a trip destination is calculated using a weighted Dijkstra method for finding the shortest path comprising nodes and edges weights wherein the nodes are the static network nodes, and the edges weights are the traffic densities.

In an embodiment, the values of average vehicle length and the safety distance are determined using real-time information gathered by a camera, or a beacon, preferably EU ETSI CAM/DENM V2X or US WAVE BSM.

In an embodiment, the wireless digital data is a vehicular network comprising a DSRC network using IEEE 802.11p or cellular V2X.

In an embodiment, the period of a broadcasting by the mobile network node, to announce its presence and facilitate discovery by neighbour mobile network nodes, is at least 5 times per second, further in particular at least 10 times per second, further in particular at least 20 times per second.

It is further disclosed a current static network node device of a wireless digital data network comprising a plurality of static network nodes and a plurality of mobile network nodes, for propagating a conflict-free replicated data type stored in a data storage of said static network node, for convergence in said wireless digital data network of the replicated data type stored in the data storage, wherein said data type comprises a predetermined number of vehicle count fields, each vehicle count field corresponding to a vehicle count for each static network node, said current static network node device comprising an electronic data processor configured for:

detecting the passing of a vehicle in surroundings of the static network node;
increasing a vehicle count field corresponding to a vehicle count for the current static network node in the stored data type;
periodically broadcasting the stored data type;
receiving a conflict-free replicated data type from a static network node or a mobile network node;
comparing the vehicle count fields of the stored data type with the received data type,
updating each vehicle count field of the stored data type with the highest vehicle count for each static network node.

In an embodiment, said device comprising a motion sensor configured for detecting the passing of a vehicle in surroundings of the static network node.

It is also disclosed a wireless digital data network system comprising a plurality of said static network nodes devices and a plurality of mobile network nodes devices, preferably wherein the mobile network nodes are an on-board units, and/or the static network nodes are road-side units.

In an embodiment, said system comprising a plurality of the said static network node devices wherein the network comprises a subset of static network nodes configured to count vehicles entering a road segment, and another subset of static network nodes configured to count vehicles exiting a road segment.

## BRIEF DESCRIPTION OF THE DRAWINGS

The following figures provide preferred embodiments for illustrating the disclosure and should not be seen as limiting the scope of invention.

**Figure 1:** Schematic comparison of the available solutions from the state of art and the present disclosure.

**Figure 2:** Schematic representation of a traffic avoidance application on a road network.

**Figure 3:** Schematic representation of the density calculation on each road segment.

**Figure 4A:** Schematic representation of traffic on a road.

**Figure 4B:** Schematic representation of traffic on a roundabout.

**Figure 5:** Schematic representation of the initial discovery and update exchange pattern between RSU and OBU.

**Figures 6A and 6B:** Flowcharts of periodic RSU and OBU decisions upon an event and given a thin/fat client.

**Figure 7:** Flowchart of periodic RSU-node backend (RSU-RSU) decisions.

**Figure 8:** Schematic representation of the data convergence between four RSU Convergent Counter (RSU-CC).

## DETAILED DESCRIPTION

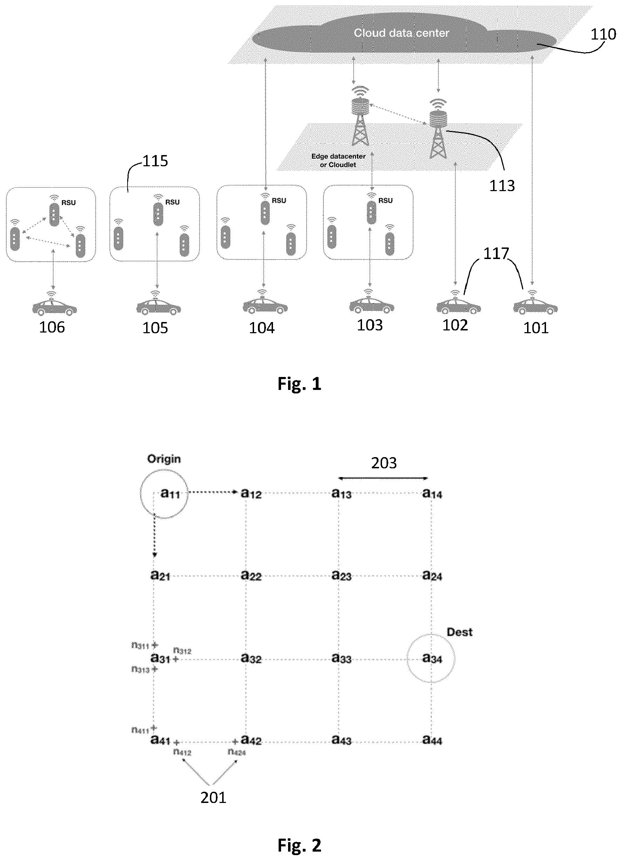

**Figure 1** shows a schematic comparison of the available solutions from the state of art and the present disclosure, where: **110** represents a cloud data centre, **113** represents an edge data centre or Cloudlet, **115** represents Roadside Units (RSU), and **117** represents a vehicle.

Here, **101** represents the main industrial existing solution which is cloud only. So, some of the disadvantages are the vehicle has to remain connected to the cloud to get timely updates; updates are subject to the known cloud latency constrains; unnecessary, bandwidth, transient traffic information is pushed to the cloud, e.g., vehicle driving in opposite sense); privacy and sovereignty issues due to hosting municipality data on public clouds, e.g., US-based.

**102** represents an optimised version of the previous solution (101), which was cloud-only. In this solution a step of communication with an Edge data centre is introduced. This internally exists in public clouds. It has some of the previous disadvantages, nevertheless it is faster, i.e., it has a low latency rate.

**103** represents an optimised version of the previous solution (102). In this solution the RSU (115) are widely deployed. RSUs send data to the cloud to update the maps using edge data centres (113). Vehicles (117) still connect to the cloud for updates. In this case the latency is lower than in the previous solution (102). An optimization is possible is to support 2-way direct vehicle to RSU updates without clouds.

**104** represents a version of the previous solution (103) assuming that there are no edge servers, i.e., direct RSU-cloud link. It could exist for small-scale clouds, but it is not scalable.

**105** represents a solution where there is only a link between RSU to a vehicle update without clouds nor other RSUs. This is common in Advanced Driver Assistance Systems (ADAS). It has the lowest latency possible, but only provides a local view, thus, it is not helpful for regional view, e.g., traffic.

**106** represents the disclosed solution where RSUs form a wireless/wired network that performs decentralized computations. This is completely cloud-agnostic. Although there is a reduced data freshness, this is not critical for map-like applications. When compared with the known solutions the advantages are many, namely:

- lower latency;
- cloud-independent;
- lower bandwidth usage since transient data is not pushed to the cloud;
- higher privacy, i.e., no cameras are needed and data is kept close in the road infrastructure instead of sharing it in public clouds, that could be deployed in another country.

As part of a smart city infrastructure, consider a city or region, that is composed of several road segments, e.g., main roads, side roads, and roundabouts. The region's road map, as in Fig. 2, is represented as a graph whose vertices are the road junctions, e.g., crosses, Vs, and roundabouts, and the edges are the road segments themselves.

**Figure 2** shows a schematic representation of a traffic avoidance application on a road network, where: **201** represents a node, and **203** represents a segment.

Each node (201) $a_{jk}$ represents a road junction, e.g., crossroad or roundabout. Roads are represented by a segment between junctions.

Without loss of generality, assume that a vehicle is following a trip from an origin at $a_{11}$ to a destination at $a_{34}$. Without cloud support, the vehicle would like to follow the best route from the origin to the destination. Wherein, a best route is the one that is less crowded, i.e., lower number of vehicles.

In an embodiment, each junction has an RSU that has, at least, one sensor that counts the number of vehicles passing the corresponding junction; connection to, at least, one neighbour RSU via a gossip protocol running over vehicle-to-Everything (V2X) wireless technology; and a conflict-free replicated data type (CRDT) that holds the counts of the entire RSU nodes.

Table 1: Represents the conflict-free replicated data type which is a map from keys to values.

| Key | Value |
| --- | --- |
| $n_{11,12}$ | $vc_{11,12}$ |
| $n_{11,21}$ | $vc_{11,21}$ |
| $n_{12,13}$ | $vc_{12,13}$ |
| $n_{12,22}$ | $vc_{12,22}$ |
| ... | ... |

The key represents the identifier (ID) of a counterpart RSU counter in the network. The value represents the count value of that ID. With this, the conflict-free replicated data type represents the global state of the network as observed by the host RSU.

When an RSU sensor, with ID $a_{jk}$, detects a new vehicle crossing the junction, it increments its count $n_{jk}$, and propagates the latter to neighbouring RSUs. This means that an RSU only updates its own count based on its own sensor readings. However, an RSU $a_{mn}$ that receives a new update from another RSU $a_{jk}$ sets the count value $vc_{jk}$ for the corresponding key $a_{mn}$ accordingly, with a precondition: $vc_{jk}$ at time t' is larger than $vc_{jk}$ at earlier time t.

This forms an incremental semi-lattice, defined in Strong Eventual Consistency or CRDTs, and thus ensures convergence across the entire network.

In an embodiment, when there is low traffic, e.g., late night, the value corresponding to each key must be the maximum circulated one in the network. Therefore, the global state converges.

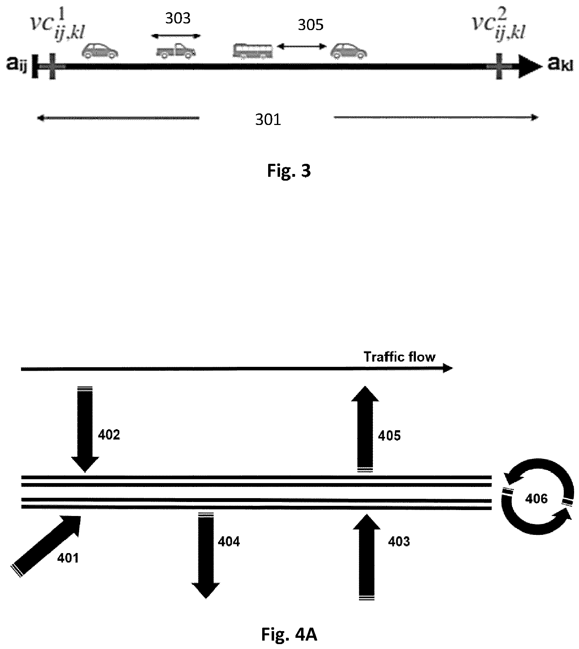

In an embodiment, the **Figure 3** shows a schematic representation of the density calculation on each road segment, where **301** represents segment length, **303** represents vehicle length, and **305** represents safety distance.

For each road segment, there are two smart devices called Roadside Units (RSU) implanted at the start and the end of the segment.

Each road segment has a maximum capacity of vehicles that depends on the traffic average speed, average length of vehicles, and distance gap between vehicles.

In the present disclosure the segment capacity is estimated using the following equation:

$$Segment\_capacity_{SID} = Lanes \times \frac{Segment\_length_{SID}}{(Average\_vehicle\_length + Safety\_distance)},$$

where SID represents a segment identification.

In an embodiment, the safety distance is at least 3,6 m. This is the distance covered by a vehicle at about 13 km/h for a reaction time of 1s.

In an embodiment, segment capacity is fixed if average vehicle length is a fixed estimate and average speed is fixed according to the road signs. To improve this estimation, real-time information about the size types of vehicles or the average speed on a road can be retrieved using a camera, e.g., EU ETSI CAM/DENM V2X, or a beacon, e.g., US WAVE BSM.

In the present disclosure the number of vehicles per road segment is estimated using the following equation:

$$Number\_of\_vehicles_{SID} = \sum_{i \in I_{SID}} c_i - \sum_{o \in O_{SID}} c_o,$$

where $I_{SID}$ and $O_{SID}$ are the sets of RSUs of incoming and outgoing vehicles to a road segment SID, respectively, and $c_i$ and $c_o$ represent the count of vehicles read at RSUs i E $I_{SID}$ and $o \in O_{SID}$, respectively.

In the present disclosure the traffic density of a segment is estimated using the following equation:

$$Traffic\_density_{SID} = \frac{Number\_vehicles_{SID}}{Segment\_capacity_{SID}},$$

where SID represents a segment identification.

In view of connectivity, the road segments are used by two types of vehicles: connected vehicles with wireless connectivity provided by an On-Board Unit (OBU), and classical vehicles with no connectivity.

The proposed solution uses data from the connected vehicles, since these are the ones that can wirelessly connect with an RSU, however the non-connected vehicles are always counted by the RSUs, not affecting, thus, the calculations of the traffic density on a road segment.

In an embodiment, an RSU or OBU have compatible wireless connectivity, e.g., V2X DSRC, V2X-C, LTE.

In an embodiment, an RSU comprises a vehicle detector, e.g., an infrared sensor, that provides simple information, such as notifying the RSU when a vehicle has passed through, with no need of vehicle identification or further information from a camera. Thus avoiding privacy issues like identification via camera-based solutions.

In an embodiment, the RSU's in a region form a wireless network that connects hundreds of RSUs. This network is unreliable, i.e., messages can be dropped, duplicated, or delayed, but eventually delivered to their destination. The network is loosely connected, i.e., likely not well synchronized, via wireless V2X, DSRC or V2X-C, connection, or wire if available.

In an embodiment, the proposed solution, here named Live Traffic Avoidance Service (LTAS), is implemented as a service hosted in a network operator. Thus, improving the static/online maps of a Connected Vehicle with live traffic details, e.g., as a plugin to the vehicle's headset GPS app.

In an embodiment, the proposed solution, here named, Live Traffic Avoidance Service (LTAS), could be implemented as a service hosted in a network operator. Thus, improving the static/online maps of connected vehicle maps with live traffic information, e.g., as a plugin to the vehicle's GPS system.

In an embodiment, the network operates as a decentralized wireless device-to-device, i.e., RSU-to-RSU, system where each RSU represents a static network node using an RSU Convergent Counter, RSU-CC.

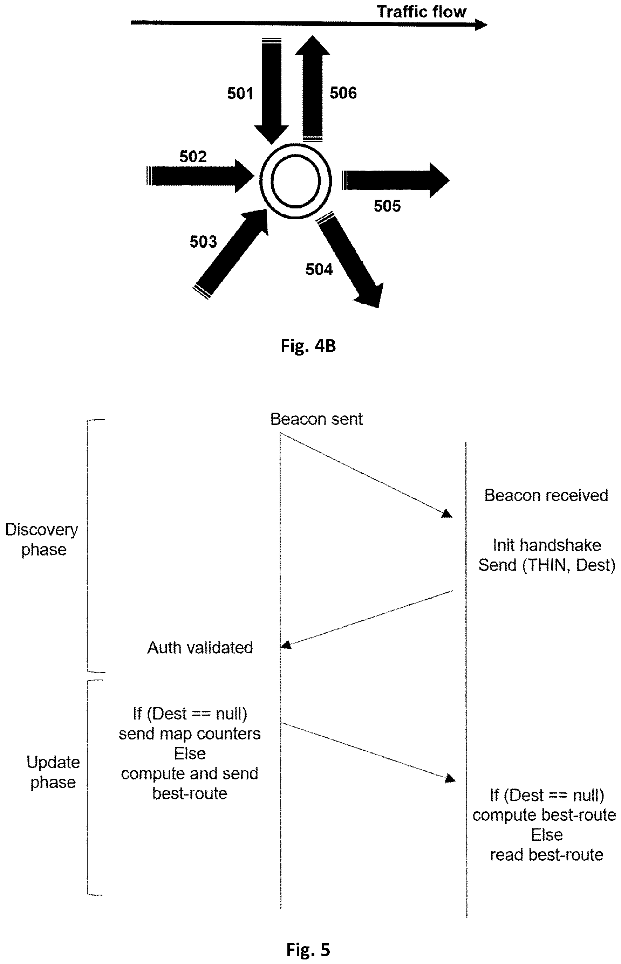

The RSU-CC ensures convergence in the counter state across all RSUs in a decentralized manner. Fig. 4A and Fig. 4B demonstrate two examples for a road and roundabout segments where an RSU-CC computes the total number of vehicles. The challenge is however how to guarantee that all RSU-CCs across a map, e.g., in Fig. 2, converges to the same value in a decentralized way.

**Figure 4A** shows a schematic representation of traffic on a road, where **401, 402** and **403** represent, respectively, a first, second and third incoming traffic segment, and **404, 405** and **406** represent, respectively, a first, second and third exit traffic segment.

In this case the main road has no sensors, but all road segments 401, 402, 403, 404, 405, and 406 have sensors.

In an embodiment, the global traffic for these road segments is computed using the RSU-CC at all road segments as: ($counts_{401}$ + $counts_{402}$ + $counts_{403}$) - ($counts_{404}$ + $counts_{405}$ + $counts_{406}$).

**Figure 4B** shows a schematic representation of traffic on a roundabout where **501, 502** and **503** represent an incoming traffic segment, and **504, 505** and **506** represent an exit traffic segment. In this case the roundabout has no sensors at all, but all road segments **501, 502, 503, 504, 505** and **506** have sensors.

Although the traffic counter counts all types of vehicles, only connected vehicles can benefit from the LTAS by using an OBU Convergent Counter (OBU-CC).

In an embodiment, the OBU-CC uses the optimistic replication where an OBU can read and use the latest observed state of the closest RSU's. The benefit is to avoid prior blocking synchronization or consensus, i.e., agreement, overhead with other RSUs, which happens in the background processes.

In an embodiment, a service is information regarding traffic avoidance, i.e., a vehicle connects to a closest RSU to calculate the best route to follow.

In an embodiment, the service algorithm manages the interaction between and RSU and OBU. It is composed of three phases: discovery, vehicle OBU update, and RSU backend update. The discovery happens once to establish a handshake connection between an OBU passing in the wireless range of a neighbour RSU. The vehicle OBU update phase continuously updates the OBU with traffic data. This process is repeated as long as connectivity is available. The OBU can establish a connection with the static network nodes via one or more RSUs within converge and receive updates without issues, even if the updates are duplicated. The RSU backend update happens in the background between RSUs to propagate their updates through themselves. Being in the background means it is transparent to the OBU, in visibility and latency.

In an embodiment, the discovery phase comprises the following steps:

- A network node, i.e., an RSU, broadcasts a periodic V2X beacon, e.g., at 10HZ rate, to announce its presence and facilitate discovery by within range of neighbour vehicles, e.g., up to 500m.

- A connected vehicle OBU within the RSU's wireless range establishes a connection with it via the V2X beacon. Classical vehicles are not able to connect. In an embodiment, the OBU sends a flag THIN: destination that contains its trip destination.

- If authentication is successful and the OBU is authorized to access the network, e.g., has a previously paid subscription, the RSU approves the connection establishment with the OBU and launches a vehicle OBU update and RSU backend update.

**Figure 5** shows a schematic representation of the initial discovery and update exchange pattern between RSU and OBU.

In an embodiment, the vehicle OBU update phase comprises the following steps:

- The RSU starts sending traffic updates to the OBU following a publish/subscribe protocol, e.g., MQTT, or through on-demand push/pull protocol.

- There are two types of traffic updates exposed by the RSU's API in RSU-CC:

    1. thin update: where a trip update is only sent by the RSU depending on the destination defined a priori by the OBU in the discovery phase. This invokes RSU-CC's send-best-route().

    2. fat update: where the entire region updates are sent by the RSU without disclosing the destination of the OBU's vehicle, for privacy reasons. This has some memory and computation overhead on the OBU, being stateful. This invokes send-region-updates() to update the entire state or send-delta-update() to update a single RSU update.

In an embodiment, the thin update is suitable for thin stateless OBU clients where the memory and computation are offloaded to the RSUs at the price of lower privacy.

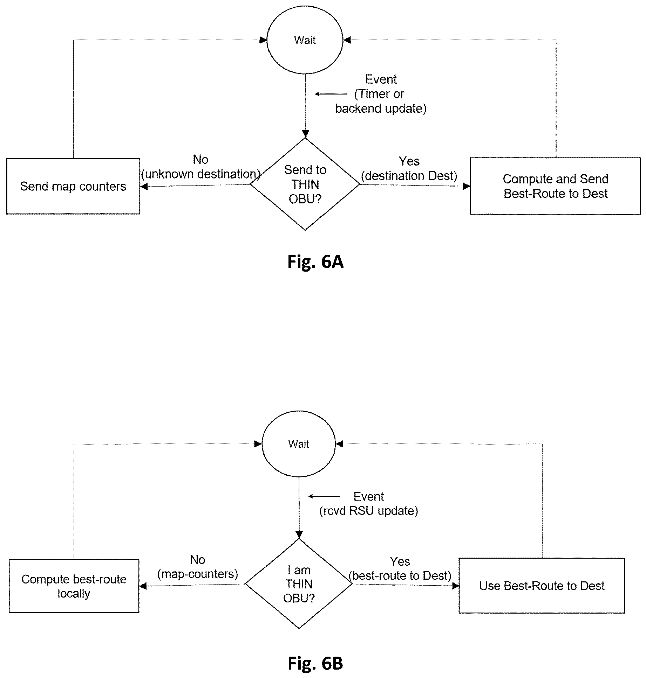

**Figure 6A and 6B** show a flowchart of periodic RSU and OBU decisions upon an event and given a thin/fat client.

The OBU updates its local traffic data, following OBU-CC specs, and selects the best trajectory to follow accordingly according to get-best-route() function in OBU-CC.

In an embodiment, the RSU Backend update phase comprises the following steps:

- Each RSU in a given region is updated by both:

    1. a sensor update, e.g., signalizing a new vehicle passing, increasing the local counter, i.e., via local-update() in the RSU-CC.

2. a peer update informing what is happening on the remote peers, e.g., as a single (delta) update invoking peer-delta-update(). The alternative is to include several updates on many RSU, as the peer RSU observes in its counter state, in this case updates are merged to the current RSU by invoking the RSU-CC peer-region-updates().

- All RSUs in the region keep exchanging updates on counters periodically, either as delta updates or entire region counter.

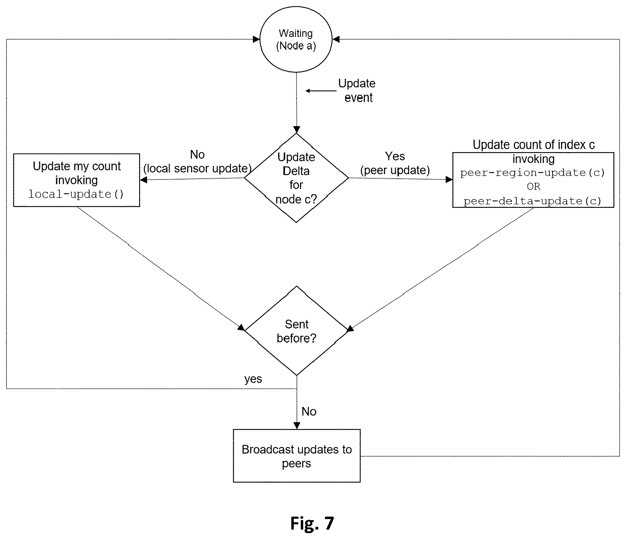

**Figure 7** shows a flowchart of periodic RSU-node backend (RSU-RSU) decisions.

In an embodiment, the algorithm RSU-CC is used by an RSU node and describes the state and events through the RSU-RSU in peer network and their sensor readings.

In an embodiment, the state of the RSU is comprises two data structures:

- rsu-counts: an RSU hash map/array whose keys are RSU identifiers (SID) and values are positive natural number counters, e.g., unsigned Integer.

- road-flows: a traffic flow hash map/array whose keys are road Segment identifiers (RSUID) and values are struct of two sets: TIN represents a set of ids of incoming traffic flow RSU node, e.g., a first incoming traffic 401, to the designated segment and TOUT that represents a set ids of outgoing traffic flow, e.g., 404 a first exit traffic, thereof.

In an embodiment, for the updates API, there are two events that trigger three local state update types:

- local-update(): an updated triggered by the sensor upon vehicle detection. This function increments the counter value of the rsu-counts corresponding to the local RSU RSUID_1:

$$local\_update() = rsu\_counts[RSUID\_1] + 1$$

- peer-delta-update(RSUID_2, VAL): which is a single (delta) update VAL coming through the network via a peer RSU with RSUID_2. This function updates the counter value of the rsu-counts corresponding to the remote RSU RSUID_2 as follows:

$$peer\_delta\_update(RSUID\_2) = rsu\_counts[RSUID\_2]$$
$$= max(rsu\_counts[RSUID\_2], VAL).$$

- peer-region-updates(rsu-counts): a compound multi-delta update that iterates over all RSU IDs and update the corresponding counts in the rsu-counts map/array, e.g., a loop on function peer-delta-update().

The above properties ensure the state convergence at all RSUs if packets are eventually propagating everywhere as it makes the rsu-counts an inflating semi-lattice [1]. The rsu-counts map in this case is a semi-lattice that is an always-increasing counter even under packet dropping or duplication.

In an embodiment, the Reads API comprises the following steps:

- get-rsu-counts(): returns the entire region counts map/array rsu-counts as observed by this RSU. This is used if the vehicle OBU is not THIN (since the OBU can compute the best-route itself).
- get-best-route(Dest): returns the best-route to a specific Dest (provided by the vehicles OBU). This is computed using weighted Dijkstra algorithm over the region road graph region-map-graph where the edge weights are the traffic densities computed in the AUXILIARY FUNCTION region-map-densities(rsu-counts, road-flows) based on the readings of the observed RSU counters in rsu-counts and the road flows defined in road-flows:

$$get\_best\_route(Dest)$$
$$= Dijkstra(region\_map\_graph, region\_map\_densities(...)$$

preferably, where region-map-graph is assumed to be available on service subscription and region-map-densities() is defined previously.

In an embodiment, the communication API:

- send-best-route(get-best-route(Dest), OBUID): send best route to THIN OBU;
- send-region-updates(rsu-counts, OBUID | RSUID): send all region counts to a peer RSU or OBU (not THIN);
- send-delta-update(VAL, OBUID | RSUID): send a selected delta update (VAL) to a peer RSU or OBU (not THIN);
- receive-region-updates(rsu-counts, RSUID): receive all region counts a peer RSU observed;
- receive-delta-update(VAL, RSUID): receive a selected delta update (VAL) to from peer RSU.

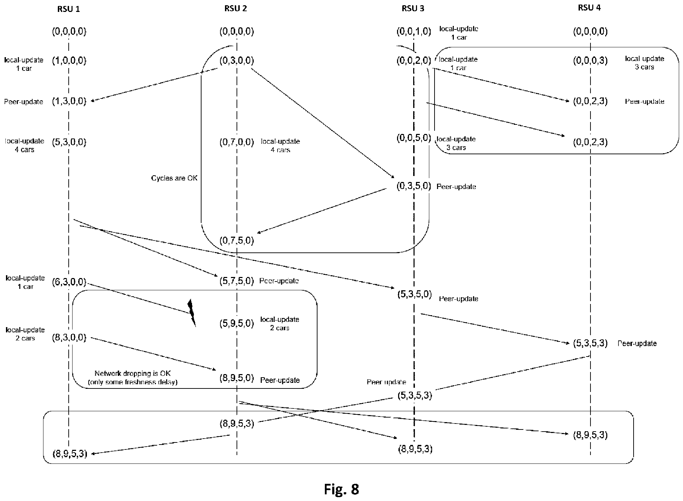

**Figure 8** shows a schematic representation of the data convergence between four RSU Convergent Counter (RSU-CC). Herein, the local-update increments the local index only and the Peer-update merges peer updates by choosing the element-wise max of the two vectors. It is shown that there is service convergence at all RSUs assuming that no local updates are made, e.g., no traffic at night.

Although the RSU-CC (8,9,5,3) is entirely replicated and convergent, the traffic density of a specific road segment is computed regarding relevant RSUs only.

For example: a segment that has TIN={RSU1, RSU2} and TOUT={RSU4}, has the following number of vehicles: 8 + 9 - 3 = 14. In classical CRDTs, there is no consideration to individual selected elements in the vector, i.e., the Read function provides the total counter value only: 8 + 9 + 5 + 3 = 25.

In an embodiment, algorithm OBU-CC is used by an OBU node and describes the state and events through the OBU-RSU interactions only since there are not peer updates or sensor readings.

In an embodiment, the state of the RSU is composed of two data structures:

1. rsu-counts: an RSU hash map/array whose keys are RSU identifiers (RSUID) and values are positive natural number counters, e.g., unsigned Integer.

2. road-flows: a Traffic flow hash map/array whose keys are road Segment identifiers (SID) and values are struct of two sets: TIN represents a set of ids of incoming traffic flow RSU node, e.g., a first incoming traffic 401, to the designated segment and TOUT that represents a set ids of outgoing traffic flow, e.g., a first exit traffic 404, thereof.

In an embodiment, for the updates API: there is a single update event that is triggered by receiving RSU update, triggering two local state updates (either delta or compound):

- delta-update(RSUID_2, VAL): which is a single (delta) update VAL coming through the associated RSU but corresponds to an update occurred at any RSU in the region with RSUID_2. This function updates the counter value of the rsu-counts corresponding to the remote RSU RSUID_2 as follows:

$$peer\_update(RSUID\_2) = rsu\_counts[RSUID\_2]$$
$$= max(rsu\_counts[RSUID\_2], VAL)$$

- region-updates(rsu-counts): a compound multi-delta update that iterates over all RSU IDs and updates the corresponding counts in the rsu-counts map/array, e.g., a loop on function peer-delta-update(). This function is more used if there is traffic since most RSU counters are incrementing more frequently.

Again, the above properties ensure the OBU state convergence to the last RSU state received as it makes the rsu-counts an inflating semi-lattice (same reference as above). The rsu-counts map/array in this case is a semi-lattice that is an always-increasing counter even under packet dropping or duplication.

In an embodiment, the reads API uses the get-best-route(Dest). This function returns the best-route to a specific Dest, short form for destination. This is computed using weighted Dijkstra algorithm over the region road graph region-map-graph where the edge weights are the traffic densities computed in the auxiliary function region-map-densities(rsu-counts, road-flows) based on the readings of the observed RSU counters in rsu-counts and the road flows defined in road-flows:

$$get\_best\_route(Dest)$$
$$= Dijkstra(region\_map\_graph, region\_map\_densities(...))$$

where region-map-graph is assumed to be available on service subscription and region-map-densities().

In an embodiment, the communication API comprises the steps:

- receive-region-counts(rsu-counts): Fat client receives all region counts an associated RSU observed to update its state, and then computes the route locally using get-best-route(Dest);
- receive-delta-update(RSUID,VAL): Fat client receives and a small delta update to its state as observed be associated RSU, and then computes the route locally using get-best-route(Dest);
- receive-best-route(get-best-route(Dest), OBUID): Thin, stateless, client can immediately use the best route integrated in a map application even without having OBU state.

In the present disclosure, the function region-map-densities(rsu-counts, road-flows): returns a map/array associating each road segment, identified with a unique identification (SID), to a traffic density previously calculated in traffic-density(SID).

The vehicle best route computation is a vehicle which is aiming to calculate the best route, e.g., less crowded, to a destination. It connects itself to the closest RSU to retrieve the global traffic counts.

The best route is calculated running a standard algorithm, e.g., Dijkstra algorithm, using the previously gathered information of the density on each road segment up to the destination.

In an embodiment, the present disclosure is deployable in pre-existing systems in a two-step approach. The first is to employ the LTAS by implementing the RSU-CC at each RSU, connecting them together via a communication protocol, e.g., Message Queuing Telemetry Transport (MQTT), and exposing the service API. The second step is to use an OBU-CC at the vehicles map software to connect to nearby RSUs and access the shared data of the LTAS.

Although freshness is not high, latency is the lowest possible, one roundtrip message exchange. Latency has a higher importance than freshness in real life situation since it is not critical, for traffic avoidance, to have a slight mismatch of accurate numbers. For instance, it is feasible for traffic avoidance to observe 300 vehicles on a road instead of 290, due to lack of freshness, without changing the best route drastically. There are other important metrics as follows:

Reduced cost: operators reduce reliance on cloud accounts and users reduce telecom payment (LTE/5G);
Sustainability: Reduce bandwidth utilization to the cloud while live fine-grained traffic data is transient, no sense of pushing it immediately and frequently to the cloud;
Privacy/sovereignty: keep data close to its source, e.g., city, instead of pushing on a cloud, and use sensors instead of identity-baes solutions, e.g., cameras;
Resilience to single point of failure and cyberattack: reduces cloud centralization as any available close-by RSU to a vehicle can provide accessibility to the service even under communication issues or delays.

Applications and uses of the present disclosure comprise: traffic avoidance, e.g., based on speed; fuel consumption; special vehicle tracking, e.g., mobile police camera, ambulance, platoonable trucks; and obstacle avoidance, e.g., crash, slippery road, fog, etc.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

References

[1] Paulo Sérgio Almeida et. al. Delta state replicated data types. Journal of Parallel and Distributed Computing, Vol 111, 2018, PP 162-173. https://doi.org/10.1016/j.jpdc.2017.08.003

**Claims**

1. Method for operating a current static network node of a wireless digital data network comprising a plurality of static network nodes and a plurality of mobile network nodes, said method comprising propagating a conflict-free replicated data type stored in a data storage of said static network node, for convergence in said wireless digital data network of the replicated data type stored in the data storage, wherein said data type comprises a predetermined number of vehicle count fields, each vehicle count field corresponding to a vehicle count for each static network node, comprising:

> detecting the passing of a vehicle in surroundings of the static network node;
> increasing a vehicle count field corresponding to a vehicle count for the current static network node in the stored data type;
> periodically broadcasting the stored data type;
> receiving a conflict-free replicated data type from a static network node or a mobile network node;
> comparing the vehicle count fields of the stored data type with the received data type,
> updating each vehicle count field of the stored data type with the highest vehicle count for each static network node.

2. Method according to the previous claim wherein the replicated data type is a hash map or array comprising keys which are static network nodes identifiers and whose values are positive natural number counters.

3. Method according to any of the previous claims wherein the replicated data type is a hash map or array comprising keys which represent road segment identifiers and whose values are structured either as a set of incoming or outgoing traffic.

4. Method according to any of the previous claims wherein in the case of receiving a conflict-free replicated data type from a mobile network node, said replicated data type originated from a static network node.

5. Method according to any of the previous claims, further comprising:
calculating a route for minimizing encountering traffic to a trip destination using said stored replicated data type of the current static network node, in particular sending the calculated route to a mobile network node.

6. Method according to any of the previous claims wherein the current static network node is connected to neighbouring static network nodes via a gossip communication protocol or wherein the network nodes are streaming the stored data type to an upstream network.

7. Method according to any of the previous claims, comprising the following steps:

calculating safety distance following the expression:

$$Safety\_distance = Average\_speed \times Reaction\_time;$$

calculating vehicle capacity for a given road segment following the expression:

$$Segment\_capacity_{SID} = Lanes \times \frac{Segment\_length_{SID}}{(Average\_vehicle\_length + Safety\_distance)};$$

calculating a number of vehicles for a given road segment following the expression:

$$Number\_of\_vehicles_{SID} = \sum_{i \in I_{SID}} c_i - \sum_{o \in O_{SID}} c_o ,$$

calculating a traffic density for a given road segment following the expression:

$$Traffic\_density_{SID} = \frac{Number\_vehicles_{SID}}{Segment\_capacity_{SID}};$$

storing the traffic density for a given road segment in a hash map or array of network traffic;
wherein SID is a road segment identification, $I_{SID}$ and $O_{SID}$ are a set of static network nodes of incoming and outgoing vehicles to a road segment, $c_i$ and $c_o$ represent a vehicle count into the road segment and a vehicle count out of the road segment,

wherein a road segment is a pair of consecutive static network nodes,

wherein the average speed, the reaction time, segment length, the average vehicle length, and number of lanes are predetermined values.

8. Method according to the previous claim wherein the route for minimizing encountering traffic to a trip destination is calculated using a weighted Dijkstra method for finding the shortest path comprising nodes and edges weights wherein the nodes are the static network nodes, and the edges weights are the traffic densities.

9. Method according to claim 7 wherein the values of average vehicle length and the safety distance are determined using real-time information gathered by a camera, or a beacon, preferably EU ETSI CAM/DENM V2X or US WAVE BSM.

10. Method according to any of the previous claims, wherein the wireless digital data is a vehicular network comprising a DSRC network using IEEE 802.11p or cellular V2X.

11. Method according to any of the previous claims wherein the period of a broadcasting by the mobile network node, to announce its presence and facilitate discovery by neighbour mobile network nodes, is at least 5 times per second, further in particular at least 10 times per second, further in particular at least 20 times per second.

12. A current static network node device of a wireless digital data network comprising a plurality of static network nodes and a plurality of mobile network nodes, for propagating a conflict-free replicated data type stored in a data storage of said static network node, for convergence in said wireless digital data network of the replicated data type stored in the data storage, wherein said data type comprises a predetermined number of vehicle count fields, each vehicle count field corresponding to a vehicle count for each static network node, said current static network node device comprising an electronic data processor configured for:

    detecting the passing of a vehicle in surroundings of the static network node;
    increasing a vehicle count field corresponding to a vehicle count for the current static network node in the stored data type;
    periodically broadcasting the stored data type;
    receiving a conflict-free replicated data type from a static network node or a mobile network node;
    comparing the vehicle count fields of the stored data type with the received data type,
    updating each vehicle count field of the stored data type with the highest vehicle count for each static network node.

13. Device according to the previous claim comprising a motion sensor configured for detecting the passing of a vehicle in surroundings of the static network node.

14. Wireless digital data network system comprising a plurality of static network nodes devices of any of the claims 12-13 and a plurality of mobile network nodes devices, preferably wherein the mobile network nodes are an onboard units, and/or the static network nodes are road-side units.

15. System according to the previous claim comprising a plurality of static network node devices of any of the claims 12-13 wherein the network comprises a subset of static network nodes configured to count vehicles entering a road segment, and another subset of static network nodes configured to count vehicles exiting a road segment.

**Fig. 1**

**Fig. 2**

$$vc_{ij,kl}^{1}$$

303

305

$$vc_{ij,kl}^{2}$$

$a_{ij}$

$a_{kl}$

301

**Fig. 3**

Traffic flow

402

405

406

401

404

403

**Fig. 4A**

**Traffic flow**

501  506

502

505

503

504

**Fig. 4B**

Beacon sent

Beacon received

Init handshake
Send (THIN, Dest)

Discovery
phase

Auth validated

Update
phase

If (Dest == null)
send map counters
Else
compute and send
best-route

If (Dest == null)
compute best-route
Else
read best-route

**Fig. 5**

**Fig. 6A**

**Fig. 6B**

**Fig. 7**

**Fig. 8**

Europäisches
Patentamt
European
Patent Office
Office européen
des brevets

# EUROPEAN SEARCH REPORT

**Application Number**

EP 23 20 5508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/227757 A1 (CHEN WAI [US] ET AL) 22 September 2011 (2011-09-22) * Paragraphs 3, 33-34, 37-38, 47, 52, 55-57, 60, 63-64, 67, 75; figures 1-2, 5 * | 1-15 | INV.<br>G08G1/01<br>G08G1/04<br>G08G1/065<br>G08G1/09<br>H04W4/44 |
| Y | SHIH CHI-SHENG ET AL: "Scalable and Bounded-time Decisions on Edge Device Network using Eclipse Zenoh", 2022 IEEE 28TH INTERNATIONAL CONFERENCE ON EMBEDDED AND REAL-TIME COMPUTING SYSTEMS AND APPLICATIONS (RTCSA), IEEE, 23 August 2022 (2022-08-23), pages 170-179, XP034202613, DOI: 10.1109/RTCSA55878.2022.00024 [retrieved on 2022-10-03] * Pages 170-172, 174 * | 1-15 | |
| A | WO 2022/010388 A1 (ERICSSON TELEFON AB L M [SE]) 13 January 2022 (2022-01-13) * the whole document * | 1-15 | |
| A | AHMAD AWAIS ET AL: "Real-Time Route Planning and Data Dissemination for Urban Scenarios Using the Internet of Things", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 26, no. 6, 1 December 2019 (2019-12-01), pages 50-55, XP011762042, ISSN: 1536-1284, DOI: 10.1109/MWC.001.1900151 [retrieved on 2019-12-20] * the whole document * | 1-15 | TECHNICAL FIELDS SEARCHED (IPC)<br><br>G08G<br>H04W<br>G01C |

-/--

The present search report has been drawn up for all claims

| Place of search | Date of completion of the search | Examiner |
|---|---|---|
| The Hague | 18 March 2024 | Lähteenmäki, Laura |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

**EP 23 20 5508**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/168081 A1 (RAN BIN [US] ET AL) 28 May 2020 (2020-05-28) * the whole document * ----- | 1-15 | |

TECHNICAL FIELDS
SEARCHED       (IPC)

The present search report has been drawn up for all claims

| Place of search | Date of completion of the search | Examiner |
|---|---|---|
| The Hague | 18 March 2024 | Lähteenmäki, Laura |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 5508

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2024

| Patent document cited in search report | | Publication date | Patent family member(s) | | Publication date |
|---|---|---|---|---|---|
| US 2011227757 | A1 | 22-09-2011 | US 2011227757 | A1 | 22-09-2011 |
| | | | WO 2011115920 | A1 | 22-09-2011 |
| WO 2022010388 | A1 | 13-01-2022 | EP 4179432 | A1 | 17-05-2023 |
| | | | US 2023297588 | A1 | 21-09-2023 |
| | | | WO 2022010388 | A1 | 13-01-2022 |
| US 2020168081 | A1 | 28-05-2020 | US 2019096238 | A1 | 28-03-2019 |
| | | | US 2020168081 | A1 | 28-05-2020 |
| | | | US 2022343755 | A1 | 27-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PAULO SÉRGIO ALMEIDA.** Delta state replicated data types. *Journal of Parallel and Distributed Computing,* 2018, vol. 111, 162-173, https://doi.org/10.1016/j.jpdc.2017.08.003